# EUROPÄISCHE PATENTANMELDUNG

(11) **EP 4 467 270 A1**
(43) Veröffentlichungstag der Anmeldung: **27.11.2024**
(21) Anmeldenummer: 23174572.0
(22) Anmeldetag: 22.05.2023
(51) Int. Cl.: B23C 3/00, B23C 3/02, B23C 5/10

(54) **VERFAHREN ZUR SPANENDEN FERTIGUNG EINER KONKAVEN KONTUR, FRÄSMASCHINE**

(71) Anmelder: Siemens Aktiengesellschaft, 80333 München (DE)
(72) Erfinder: Rahn, Klaus, 91623 Sachsen bei Ansbach (DE)
(74) Vertreter: Siemens Patent Attorneys

(57) **Zusammenfassung**

Die Erfindung betrifft ein Verfahren zur spanenden Fertigung einer konkaven Kontur (CNT), insbesondere einer Tasche oder Kreistasche in einem Werkstück (WPC) mittels eines Fräsers (MLN) einer Fräsmaschine (MLM),
wobei der Fräser (MLN) um eine Werkzeugachse (TLX) rotierbar ist,
wobei der rotierende Fräser (MLN) während des Bearbeitungsvorgangs entlang einer Bewegungsbahn (PTH) geführt wird, derart, dass eine oder mehrere Schneiden (CTE) des Fräsers (MLN) Material des Werkstücks (WPC) abtragen, so dass sich die Kontur (CNT) ergibt.

Um die Fertigung von konkaven Konturen (CNT) zu beschleunigen, sieht die Erfindung vor, dass die Werkzeugachse (TLX) des Fräsers (MLN) derart zu der Bewegungsbahn (PTH) geneigt ist, dass der Fräser (MLN) nur mit den in momentaner Bewegungsrichtung entlang der Bewegungsbahn (PTH) vorne (FRT) befindlichen Schneiden (CTE) Material vom Werkstück (WPC) abträgt und die in momentaner Bewegungsrichtung entlang der Bewegungsbahn (PTH) jeweils hinten (BCK) befindlichen Schneiden (CTE) keinen Materialabtrag vom Werkstück (WPC) leisten.

## Beschreibung

Die Erfindung betrifft ein Verfahren zur spanenden Fertigung einer konkaven Kontur, insbesondere einer Tasche oder Kreistasche in einem Werkstück mittels eines Fräsers einer Fräsmaschine,
wobei der Fräser um eine Werkzeugachse rotierbar ist,
wobei der rotierende Fräser während des Bearbeitungsvorgangs entlang einer Bewegungsbahn geführt wird, derart, dass eine oder mehrere Schneiden des Fräsers Material des Werkstücks abtragen, so dass sich die Kontur ergibt.

Im Umfeld der maschinellen spanenden Bearbeitung ist eine Tasche ein Hohlraum, der durch Fräsen in ein Werkstück eingebracht wird. Sie wird typischerweise mit einem Fräser in einer speziellen Form gefräst, um eine bestimmte Taschenform zu erzeugen. Die Tasche kann dazu dienen, bestimmte Teile oder Komponenten in das Werkstück einzusetzen oder um eine bestimmte Stelle auszusparen. Taschen können in verschiedenen Größen und Tiefen gefräst werden und erfordern in der Regel spezielle Fräswerkzeuge und Bearbeitungsstrategien.

Eine Kreistasche eine spezielle Art von Ausnehmung bzw. Hohlraum in einem Werkstück, die durch einen kreisförmigen Fräsvorgang in ein Werkstück eingearbeitet wird. Die Kreistasche kann auch als Ausgangspunkt für weitere Bearbeitungen dienen, wie zum Beispiel zum Fräsen von Gewinden oder Bohrungen und werden in verschiedenen Größen und Tiefen gefräst.

Eine Werkzeugmaschine ist eine Maschine, die Werkstücke durch die Bearbeitung von Materialien wie beispielsweise Metall, Holz oder Kunststoff in bestimmte Formen und Größen bringt. Zu den wichtigsten Vertretern zählen Dreh- und Fräsmaschinen, Erodiermaschinen sowie mechanische Pressen und Maschinenhämmer zum Schmieden. Die Erfindung beschäftigt sich mit Verfahren, die mittels Fräsmaschinen angewendet werden.

Eine Kontur beschreibt die äußere Form eines Objekts oder einer Fläche. Die Kontur der Tasche ist nach der Erfindung die Geometrie der Grenzfläche zwischen dem Material des Werkstücks und dem Umgebungsmedium - in der Regel Luft.

Das Herstellen von Kreistaschen in Werkstücken erfolgt gegenwärtig sehr langsam. Eine erste Möglichkeit sieht eine Startbohrung vor, so, dass ein weiteres Werkzeug mit Werkzeugwechsel erforderlich ist.

Alternativ oder weiterhin kann die Kreistasche mit einer langsamen 3-achsigen Helix-Bewegung erzeugt werden, wobei der Fräser mit dem in Bewegungsrichtung hinteren Teil aufgrund des axialen Vorschubs der Helix-Bewegung auch noch im Eingriff bleibt und "nachschneidet". Dieses Nachschneiden hat zur Folge, dass der Vorschub sehr langsam eingestellt werden muss.

Beide Fertigungsstrategien und Mischformen daraus sind zeitaufwändig infolge von zusätzlichen Werkzeugwechseln und/oder zwingend langsamen Fertigungsverfahren.

Herkömmlich gibt es keine schnellere Lösung für die Fertigung von konkaven Konturen, insbesondere Kreistaschen in Werkstücken.

Ausgehend von den beschriebenen Problemen und Nachteilen des Standes der Technik hat es sich die Erfindung zur Aufgabe gemacht, ein Verfahren eingangs definierter Art derart weiterzubilden, sodass die erläuterten Probleme und Nachteile vermieden werden. Insbesondere ist es Aufgabe der Erfindung eine schnellere Methode zur Fertigung von konkaven Konturen, Taschen, insbesondere von Kreistaschen, zu schaffen.

Zur erfindungsgemäßen Lösung der Aufgabe wird ein Verfahren eingangs definierter Art mit den zusätzlichen Merkmalen des Kennzeichens des unabhängigen Anspruchs 1 vorgeschlagen. Daneben schlägt die Erfindung eine entsprechend zur Durchführung des Verfahrens vorbereitete Fräsmaschine vor.

Im Einzelnen wird das Verfahren der eingangs genannter Art vorgeschlagen, bei dem die Werkzeugachse des Fräsers derart zu der Bewegungsbahn geneigt ist, dass der Fräser nur mit den in momentaner Bewegungsrichtung entlang der Bewegungsbahn vorne befindlichen Schneiden Material vom Werkstück abträgt und die in momentaner Bewegungsrichtung entlang der Bewegungsbahn jeweils hinten befindlichen Schneiden keinen Materialabtrag vom Werkstück leisten.

Besonders zweckmäßig ist hierzu vorgesehen, dass die Werkzeugachse um einen Voreilwinkel in Bewegungsrichtung mindestens so weit nach vorne geneigt ist, dass eine stirnseitige mittlere Endfläche des Fräsers mindestens parallel zu einer Tangente an der Bewegungsbahn ist, so dass die in Bewegungsrichtung hinten befindlichen Schneiden des Fräsers nicht infolge des im Wesentlichen axialen Vorschubs in Tiefenrichtung der Kontur schneiden bzw. nachschneiden. Vorzugsweise ist der Voreilwinkel etwas größer gewählt, so dass die hinten befindlichen Schneiden mit höherer Sicherheit keinen abtragenden Materialkontakt haben.

Um eine Kollision des Fräsers mit den Seitenwänden der Kontur infolge des Voreilwinkels wird zu verhindern, ist vorgesehen, dass die Werkzeugachse in Richtung einer Flächennormalen der zu fertigenden konkaven Kontur an dem Berührpunkt des Fräsers an dem Material geneigt wird. Auf diese Weise weicht der Fräser mit seinem der Werkzeugaufnahme näherem Bereich der bereits bearbeiteten Seitenwand der Kontur aus.

Vereinfacht ausgedrückt - zur einfacheren räumlichen Vorstellung - bewegt die Fräsmaschine das Werkzeug derart in der konkaven Ausnehmung vergleichbar mit einem Koch, der aus dem Handgelenk (Neigung des Löffelstiels zur Schüsselmitte hin) mit einem Löffel (Werkzeug ist der Löffel, Löffelstiel ist die Werkzeugachse) den Inhalt einer Schüssel (konkave Kontur) umrührt und dabei der Löffel derart schräg gehalten wird, dass der Stiel dem Löffel konstant etwas vorauseilt. Dadurch schneidet das Werkzeug nur mit dem gewünschten, in Bewegungsrichtung gesehen, vorderen Teil des Fräsers und es kann mit hohem Vorschub gearbeitet werden. Die konkave Kontur ist somit in kürzerer Zeit hergestellt als herkömmlich. Bei einer 5-Achsenmaschine stellt sich dem raumfesten Betrachter die Bewegung des Fräsers anders dar, weil Die Bewegung des Werkzeugs teilweise durch eine Dreh- und Schwenkbewegung des Maschinentisches und teilweise mittels der Translation der Werkzeugspindel umgesetzt wird.

Im Sinne der Erfindung ist ein Fräser ein Werkzeug, das zum Schneiden von Materialien wie Metall, Kunststoff oder Holz verwendet wird. Der Fräser besteht aus einer rotierenden Schneide oder aus Schneiden, die in der Regel auf einer rotierenden Spindel montiert sind. Der Fräser wird in einer Fräsmaschine eingesetzt, die das Werkstück hält und die Bewegung des Fräsers steuert. Der Schaftfräser hat eine zylindrische oder konische Form und wird in der Regel in einer Fräsmaschine eingesetzt. Der Schaft des Fräsers ist so geformt, dass er in die Spannzange oder mittels des Spannfutters der Maschine eingespannt werden kann. Es gibt verschiedene Arten von Schaftfräsern, einschließlich Endfräsern, Stirnfräsern, Nutfräsern und Kugelfräsern, die für verschiedene Fräsarbeiten eingesetzt werden können.

Eine vorteilhafte Weiterbildung der Erfindung sieht vor, dass die in Bewegungsrichtung entlang der Bewegungsbahn vorne befindlichen Schneiden die Schneiden sind, die sich in einer Umfangsrichtung des Fräsers bezüglich der Werkzeugachse in einem Winkelbereich bis zu jeweils betragsmäßig 90° zu der Bewegungsrichtung entlang der Bewegungsbahn befinden und die hinten befindlichen Schneiden diejenigen sind, die mit der Bewegungsrichtung entlang der Bewegungsbahn einen Winkel von betragsmäßig mehr als 90° einschließen.

Eine vorteilhafte Weiterbildung der Erfindung sieht vor, dass während des Material-abtragenden Fertigungsprozesses der Fräsmaschine ein momentaner Berührpunkt des Fräsers an dem Material der zu fertigenden konkaven Kontur den Nullpunkt eines rechtwinkligen räumlichen Koordinatensystems definiert, wobei eine Flächennormale der zu fertigenden konkaven Kontur an dem Berührpunkt des Fräsers an dem Material eine erste Achse des Koordinatensystems definiert,
wobei eine Tangente an der Bewegungsbahn an dem Berührpunkt eine zweite Achse des Koordinatensystems definiert und eine dritte Achse des Koordinatensystems senkrecht zu der ersten Achse und zweiten Achse angeordnet ist,
wobei die Werkzeugachse gegenüber der Bewegungsbahn derart geneigt ist, dass zwischen einer Projektion der Werkzeugachse in der Ebene eines ebenen Koordinatensystems der zweiten Achse und dritten Achse sich im ersten Quadranten des ebenen Koordinatensystems zu der zweiten Achse ein Winkel kleiner 90° ausgebildet,
wobei die Werkzeugachse gegenüber der ersten Achse derart geneigt ist, dass zwischen einer Projektion der Werkzeugachse in der Ebene eines ebenen Koordinatensystems der ersten und dritten Achse sich im ersten Quadranten dieses ebenen Koordinatensystems zu der ersten Achse ein Winkel kleiner 90° ausgebildet.

Eine vorteilhafte Weiterbildung der Erfindung sieht vor, dass die Kontur kreiszylinderförmige Seitenwände aufweist und die Bewegungsbahn eine Helix ist. Erfindungsgemäße wird die Werkzeugachse in Bewegungsrichtung nach vorne geneigt. Gleichzeitig wird die Werkzeugachse immer in Richtung der Kreistaschenmitte geneigt.

Eine vorteilhafte Weiterbildung der Erfindung sieht vor, dass zur Fertigung einer Kontur mit einer ebenen Bodenfläche und zur Bodenfläche senkrechten Seitenwänden,
wobei der Fräser ein zylindrischer Schaftfräser ist,
wobei eine erste Verfahrensphase eine Bearbeitung nach einem der vorhergehenden Ansprüche vorsieht,
wobei eine zweite Verfahrensphase eine Aufrichtung der Werkzeugachse im Bereich der zu fertigenden ebenen Bodenfläche senkrecht zur Bodenfläche und ein Fräsen der Seitenwände mittels seitlicher Schneiden des Schaftfräsers vorsieht,
wobei eine dritte Verfahrensphase ein Planfräsen der ebenen Bodenfläche mittels einer Stirnseite des Schaftfräsers vorsieht.

Die zur Durchführung des Verfahrens vorbereitete Fräsmaschine ist besonders vorteilhaft als 5-Achsen-Fräsmaschine ausgebildet. Hierbei ist es zweckmäßig, wenn drei translatorische Verfahrachsen einer Werkzeugaufnahme eine Schwenkachse eines Maschinentisches und eine Rotationsachse des Maschinentisches vorgesehen sind.

Grundsätzlich kann das Verfahren beispielsweise mittels eines Schaftfräser, eines torischen Fräsers, eines Kugelfräsers oder eines Tonnenfräser durchgeführt werden. Bevorzugt ist der Fräser ein zylindrischer Schaftfräser.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1:: eine schematische räumliche Darstellung einer Fräsmaschine mit einem Werkstück bei der Durchführung des erfindungsgemäßen Verfahrens,
- Figur 2:: ein Ablaufdiagramm, dass Schritte eines Verfahrens nach der Erfindung illustriert.

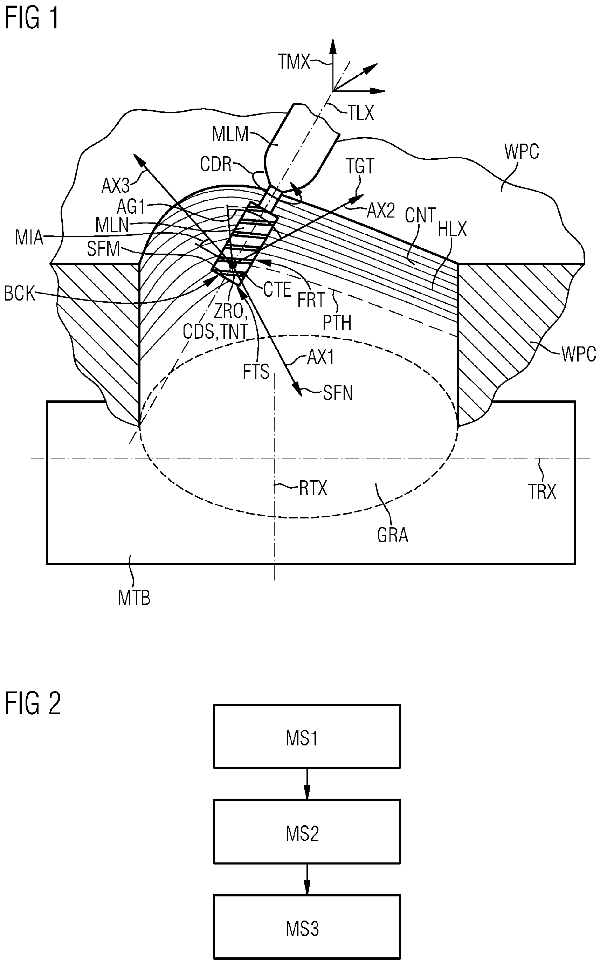

Figur 1 zeigt beispielhaft eine Fräsmaschine MLM bei der Durchführung eines erfindungsgemäßen Verfahrens zur spanenden Fertigung einer konkaven Kontur CNT in einem Werkstück WPC mittels eines Fräsers MLN, der in einer Werkzeugaufnahme TRC der Fräsmaschine MLM befestigt ist. Die Kontur kann hierbei einen über die Konturtiefe beliebig variierenden Querschnitt aufweisen, solange die Kontur konkav bleibt. Hierbei sind auch ebene Flächen als Bestandteil der Kontur möglich. Insbesondere kann es sich um eine Tasche mit konstantem Querschnittsverlauf in Tiefenrichtung handeln, beispielsweise eine Kreistasche.

Die Fräsmaschine MLM ist hier eine 5-Achsen-Fräsmaschine MLM mit drei translatorische Verfahrachsen TMX der Werkzeugaufnahme TRC, mit einer Schwenkachse TRX eines Maschinentisches MTB und einer Rotationsachse RTX des Maschinentisches MTB. Das Werkstück WPC ist in nicht näher dargestellter Weise an dem Maschinentisch MTB angebracht bzw. aufgespannt. Der Fräser MLN ist ein zylindrischer Schaftfräser SFM.

Der Fräser MLN ist um eine Werkzeugachse TLX rotierbar und wird rotierend während des Bearbeitungsvorgangs entlang einer Bewegungsbahn PTH geführt. Die Bewegungsbahn PTH ist hierbei derart gestaltet, dass eine oder mehrere Schneiden CTE des Fräsers MLN Material des Werkstücks WPC abtragen, so dass sich die Kontur CNT ergibt.

Entscheiden für die Erfindung ist, dass die Werkzeugachse TLX des Fräsers MLN derart zu der Bewegungsbahn PTH geneigt ist, dass der Fräser MLN nur mit den in momentaner Bewegungsrichtung entlang der Bewegungsbahn PTH vorne FRT befindlichen Schneiden CTE Material vom Werkstück WPC abträgt und die in momentaner Bewegungsrichtung entlang der Bewegungsbahn PTH jeweils hinten BCK befindlichen Schneiden CTE keinen Materialabtrag vom Werkstück WPC leisten. Hierbei bedeutet "vorne" befindlichen Schneiden CTE, die Schneiden CTE, die sich in einer Umfangsrichtung CDR des Fräsers MLN bezüglich der Werkzeugachse TLX in einem Winkelbereich bis zu jeweils betragsmäßig 90° zu der Bewegungsrichtung entlang der Bewegungsbahn PTH befinden. Entsprechend sind die übrigen hinten BCK befindlichen Schneiden CTE diejenigen, die mit der Bewegungsrichtung entlang der Bewegungsbahn PTH einen Winkel von betragsmäßig mehr als 90° einschließen.

Für eine etwas präzisere Betrachtungsweise der räumlichen Schrägstellung des Fräsers nach dem Verfahren ist es zweckmäßig ein Koordinatensystem zu betrachten, dass der Bewegungsbahn PTH folgt.

Ein momentaner Berührpunkt TPT des Fräsers MLN an dem Material der zu fertigenden konkaven Kontur CNT sei der Nullpunkt ZRO eines rechtwinkligen räumlichen Koordinatensystems CDS. Eine Flächennormale SFN der zu fertigenden konkaven Kontur CNT an dem Berührpunkt TPT des Fräsers MLN an dem Material sei eine erste Achse AX1 des Koordinatensystems CDS. Eine Tangente TGT an der Bewegungsbahn PTH an dem Berührpunkt TPT sei eine zweite Achse AX2 des Koordinatensystems CDS. Eine dritte Achse AX3 des Koordinatensystems CDS sei senkrecht zu der ersten Achse AX1 und zweiten Achse AX2 angeordnet. Mit dieser Definition kann die Orientierung der Werkzeugachse TLX gegenüber der Bewegungsbahn PTH als derart geneigt definiert werden, dass zwischen einer ersten Projektion PJ1 der Werkzeugachse TLX in der Ebene eines ebenen Koordinatensystems CDS der zweiten Achse AX2 und dritten Achse AX3 sich im ersten Quadranten QD1 des ebenen Koordinatensystems CDS zu der zweiten Achse AX2 ein erster Winkel AG1 kleiner 90° ausgebildet. Diese eine Differenz dieses Neigungswinkels zu 90° kann anschaulich als Voreilwinkel des Fräsers MLN in Richtung der Bewegungsbahn PTH bezeichnet werden.

Weiterhin ist die Werkzeugachse TLX gegenüber der ersten Achse AX1 derart geneigt, dass zwischen einer Projektion der Werkzeugachse TLX in der Ebene eines ebenen Koordinatensystems CDS der ersten und dritten Achse AX3 sich im ersten Quadranten QD1 dieses ebenen Koordinatensystems CDS zu der ersten Achse AX1 ein Winkel kleiner 90° ausgebildet. Diese Winkelabweichung MIA, die auch als Mittenneigung bezeichnet werden kann, der Werkzeugachse von der momentanen dritten Achse AX3 verhindert eine Kollision des Fräsers infolge des Voreilwinkels mit der bereits gefrästen Kontur. Weil diese Winkel von der Position des Berührpunktes abhängen, ist die sich ergebende Bewegung des Fräsers vergleichbar mit einer Taumelbewegung im Verlauf der Bahnbewegung des Fräsers. Dieses Taumeln gilt nur für eine Relativbewegung des Fräsers zu dem Werkstück. Bei einer 5-Achsenmaschine wird die Bewegungsbahn teilweise durch eine Dreh- und Schwenkbewegung des Maschinentisches und teilweise mittels der Translation der Werkzeugspindel umgesetzt. Demzufolge ergibt sich absolut - also für den raumfesten Betrachter - keine Taumelbewegung.

Zweckmäßig verläuft die Bahnbewegung Helix-artig entlang der Kontur in einer Tiefenrichtung der Kontur unter Abtragung des Materials.

Handelt es sich bei der Kontur CNT um eine Kreistasche, die kreiszylinderförmige Seitenwände SWL aufweist, ist die Bewegungsbahn PTH eine im Querschnitt kreisförmige Helix HLX. Das Verfahren führt hierbei zu einem Gewinde-ähnlichen Muster an den Seitenwänden SWL. Wenn diese Schrupp-Fräs-Qualität nicht gewünscht ist, kann anschließend der Fräser MLN aufgerichtet werden und eine Schlicht-Qualität der Seitenwänden SWL - unter verhältnismäßig geringem Materialabtrag - gefräst werden.

Grundsätzlich kann - wie in Figur 2 illustriert - eine Bearbeitung in drei Verfahrensphasen MS1, MS2, MS3 erfolgen. In einer ersten Verfahrensphase MS3 erfolgt eine Bearbeitung mit der doppelten Werkzeugachsenschrägstellung - wie bereits erläutert.

In einer zweiten Verfahrensphase MS2 erfolgt eine Aufrichtung der Werkzeugachse TLX im Bereich der zu fertigenden ebenen Bodenfläche GRA senkrecht zur Bodenfläche GRA und ein Fräsen der Seitenwände SWL mittels seitlicher Schneiden CTE des Schaftfräsers SFM.

Während einer dritten Verfahrensphase MS3 erfolgt ein Planfräsen der ebenen Bodenfläche GRA mittels einer Stirnseite FTS des Schaftfräsers SFM.

Ein Fertigungsverfahren zur Herstellung einer Kreistasche kann beispielhaft die folgenden Anweisungen (SPF-Datei bzw. MPF-File) an die Fräsmaschine mit Sinumerik-Steuerung - hier 5-Achsbearbeitung - umfassen, die die Winkel bestimmen die zur erfindungsgemäßen räumlichen Neigung des Fräsers führen. Das Programm bzw. Unterprogramm ist beispielhaft für die Sinumerik-Steuerung, kann prinzipiell aber auch auf jede andere Steuerung genauso adoptiert werden. Die gewählten Parameter für Durchmesser, Tiefe, Anstellung und Zustellung pro Umlauf werden in der Sinumerik mit Hilfe der Zeile N10 aus dem Hauptprogramm an das Unterprogramm übergeben.

```
    ;HELIX - 5-ACHSBEARBEITUNG
   N10 PROC HELIX08(REAL _DURCH,REAL _TIEF, REAL _SCHRAE,
   REAL _STEP) SAVE SBLOF DISPLOF
   N20 DEF REAL _APOSX
   N30 DEF REAL _APOSY
   N40 DEF REAL _APOSZ
   N50 DEF REAL _KPOSZ
   N60 DEF REAL _KENDZ
   N70 DEF REAL _WINK
   N80 DEF REAL _VORWI
   N90 DEF REAL _CHECK
   N100 DEF REAL _ORGDURCH
   N110 DEF REAL _MDURCH
   N120 _APOSX=$AA_IW[X]
   N130 _APOSY=$AA_IW[Y]
   N140 _APOSZ=$AA_IW[Z]
   N150 _KPOSZ=_APOSZ
   N160 _WINK=0
   N170 _VORWI=_SCHRAE
   N180 _ORGDURCH=_DURCH
   N190 _MDURCH=0
```

```
    ;FALL mehrere Durchläufe notwendig Start
   N200 CYCLE832(0.05,_ROUGH,1)
   N210 WIED2:
   N220 _MDURCH=_MDURCH+1
   N230 IF (_MDURCH*$P_TOOLR*2)<(ORGDURCH-2*$P_TOOLR)
   N240 _DURCH=(_MDURCH+1)*($P_TOOLR*2)
   N250 ELSE
   N260 _DURCH=_ORGDURCH
   N270 ENDIF
   N280 STOPRE
    ;FALL mehrere Durchläufe notwendig Ende
```

```
;check - sind die Parameter sinnvoll (WKZ DM?, zu
    Tiefe?,notwendige SCHRAEGE? - START
   N290 IF _SCHRAE<=(ATAN2(_STEP, (0.75*2*3.14*(_DURCH/2-
    $P_TOOLR))));wenn Neigungswinkel zu niedrig
   N300 _SCHRAE=ATAN2(_STEP,(0.75*2*3.14*(_DURCH/2-
    $P_TOOLR)));Neigungswinkel_setzen
   N310 ENDIF
   N320 _VORWI=_SCHRAE
   N330 _CHECK=(_DURCH-
    ($P_TOOLR*2))/(SQRT((sin(_SCHRAE)*sin(_SCHRAE))*2))
   N340 IF _CHECK<=_TIEF
   N350 MSG("zu tief fuer die benoetigte Anstellung")
   N360 M0
   N370 M30
   N380 ENDIF
    ;check - sind die Parameter sinnvoll (WKZ DM?, zu
    Tiefe?,notwendige SCHRAEGE? - ENDE
```

```
    ;Startposition anfahren Start
   N390 TRAORI
   N400 OTOL=0.1
   N410 ORISON
   N420 FGREF[C]=(_DURCH);Drehgeschwindigkeit Grad pro Zeit
   umrechnen in Weg pro Zeit
   N430 _DURCH=_DURCH/2-$P_TOOLR;Helixdurchmesser Mittel-
   punkbahn - ab jetzt Radius!!!!
   N440 _KPOSZ=_KPOSZ+sin(_SCHRAE)*$P_TOOLR;Höhenkorrektur
    durch Anstellung
   N450 _KENDZ= _APOSZ+(-
    1)*_TIEF+sin(_SCHRAE)*$P_TOOLR;Tiefenkorrektur durch An-
    stellung
   N460 G1 X=_APOSX+COS(0)*_DURCH
   Y=_APOSY+SIN(0)*_DURCH;Startposition anfahren
   N470 G1 Z=_KPOSZ A3=(COS(_WINK+180-_VORWI)*TAN(_SCHRAE))
   B3=(SIN(_WINK+180-_VORWI)*TAN(_SCHRAE))
    C3=(cos(_SCHRAE))
    ;korrigierte Höhe durch Anstellung mit Anstellung anfah-
    ren Ende
```

```
    ;Schleife Helixbahn start
   N490 STOPRE
   N500 MARK1:
   N510 _WINK=_WINK+(360/(6.28*_DURCH*2))
   N520 _KPOSZ=_KPOSZ-(_STEP/(360/(360/(6.28*_DURCH*2))))
   N530 IF _KPOSZ<_KENDZ
   N540 _KPOSZ=_KENDZ
   N550 ENDIF
   N560 G1 X= _APOSX+COS(_WINK)*_DURCH
   Y=_APOSY+SIN(_WINK)*_DURCH Z=_KPOSZ
   A3=(SIN(_WINK+180+45+_VORWI)*tan(_SCHRAE))
   B3=(SIN(_WINK+90+45+_VORWI)*TAN(_SCHRAE))
    C3=(cos(_SCHRAE))
   N570 IF (_WINK+(360/(6.28*_DURCH*2)))<360
   N580 GOTOB MARK1
   N590 ENDIF
   N600 IF _KPOSZ>(_KENDZ)
   N610 _WINK=0
   N620 GOTOB MARK1
   N630 ENDIF
    ;Schleife Helixbahn Ende
```

```
    ;Schleife auf der Endtiefe mit reduzierender Anstellung
    - Start
   N640 _DURCH=((_DURCH/2)*(cos(_SCHRAE))*cos(_SCHRAE))*2
   N650 _WINK=0
   N660 SPRUNG:
   N670 _WINK=_WINK+(360/(6.28*_DURCH*2))
   N680 G1 X= _APOSX+COS(_WINK)*_DURCH
   Y=_APOSY+SIN(_WINK)*_DURCH
    Z=_KENDZ+((sin(_WINK/4))*(sin(_SCHRAE)*$P_TOOLR))
   A3=(cos(_WINK/4))*(COS(_WINK+180-_VORWI)*tan(_SCHRAE))
   B3=(cos(_WINK/4))*(SIN(_WINK+180-_VORWI)*TAN(_SCHRAE))
    C3=(cos(_SCHRAE))
   N690 IF (_WINK)<=360
   N700 GOTOB SPRUNG
   N710 ENDIF
    ;Schleife auf der Endtiefe mit reduzierender Anstellung
    - Ende
```

```
    ;schleife auf der Endtiefe ohne Anstellung- Start
   N720 _WINK=0
   N730 SPRUNG:
   N740 _WINK=_WINK+(360/(6.28*_DURCH*2))
   N750 G1 X= _APOSX+COS(_WINK)*_DURCH
   Y=_APOSY+SIN(_WINK)*_DURCH Z=_KENDZ-
    (sin(_SCHRAE)*$P_TOOLR) A3=0 B3=0 C3=1
   N760 IF (_WINK)<=360
   N770 GOTOB SPRUNG
   N780 ENDIF
    ;schleife auf der Endtiefe - Ende
```

```
    ;Startposition wieder anfahren - Start
   N790 G1 Z=_APOSZ
   N800 G1 X= _APOSX Y= _APOSY A3=0 B3=0 C3=1
    ;Startposition wieder anfahren - ENDE
    ;FALL mehrere Durchläufe
   N810 IF (_MDURCH*$P_TOOLR*2)<(_ORGDURCH-
    2*$P_TOOLR) ;wieder org.Durch dann evtl Rücksprung
   N820 _KPOSZ=_APOSZ
   N830 _WINK=0
   N840 GOTOB WIED2
   N850 ENDIF
   N860 TRAFOOF
    ;N870 FGREF[C]=10
   N880 M17
```

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur spanenden Fertigung einer konkaven Kontur (CNT), insbesondere einer Tasche oder Kreistasche in einem Werkstück (WPC) mittels eines Fräsers (MLN) einer Fräsmaschine (MLM),
wobei der Fräser (MLN) um eine Werkzeugachse (TLX) rotierbar ist,
wobei der rotierende Fräser (MLN) während des Bearbeitungsvorgangs entlang einer Bewegungsbahn (PTH) geführt wird, derart, dass eine oder mehrere Schneiden (CTE) des Fräsers (MLN) Material des Werkstücks (WPC) abtragen, so dass sich die Kontur (CNT) ergibt,
**dadurch gekennzeichnet, dass**
die Werkzeugachse (TLX) des Fräsers (MLN) derart zu der Bewegungsbahn (PTH) geneigt ist, dass der Fräser (MLN) nur mit den in momentaner Bewegungsrichtung entlang der Bewegungsbahn (PTH) vorne (FRT) befindlichen Schneiden (CTE) Material vom Werkstück (WPC) abträgt und die in momentaner Bewegungsrichtung entlang der Bewegungsbahn (PTH) jeweils hinten (BCK) befindlichen Schneiden (CTE) keinen Materialabtrag vom Werkstück (WPC) leisten.

2. Verfahren nach Anspruch 1, wobei die in Bewegungsrichtung entlang der Bewegungsbahn (PTH) vorne (FRT) befindlichen Schneiden (CTE) die Schneiden (CTE) sind, die sich in einer Umfangsrichtung (CDR) des Fräsers (MLN) bezüglich der Werkzeugachse (TLX) in einem Winkelbereich bis zu jeweils betragsmäßig 90° zu der Bewegungsrichtung entlang der Bewegungsbahn (PTH) befinden und die hinten (BCK) befindlichen Schneiden (CTE) diejenigen sind, die mit der Bewegungsrichtung entlang der Bewegungsbahn (PTH) einen Winkel von betragsmäßig mehr als 90° einschließen.

3. Verfahren nach einem der vorhergehenden Ansprüche,
wobei ein momentaner Berührpunkt (TPT) des Fräsers (MLN) an dem Material der zu fertigenden konkaven Kontur (CNT) den Nullpunkt (ZRO) eines rechtwinkligen räumlichen Koordinatensystems (CDS) definiert,
wobei eine Flächennormale(SFN) der zu fertigenden konkaven Kontur (CNT) an dem Berührpunkt (TPT) des Fräsers (MLN) an dem Material eine erste Achse (AX1) des Koordinatensystems (CDS) definiert,
wobei eine Tangente (TGT) an der Bewegungsbahn (PTH) an dem Berührpunkt (TPT) eine zweite Achse (AX2) des Koordinatensystems (CDS) definiert und eine dritte Achse (AX3) des Koordinatensystems (CDS) senkrecht zu der ersten Achse (AX1) und zweiten Achse (AX2) angeordnet ist, wobei die Werkzeugachse (TLX) gegenüber der Bewegungsbahn (PTH) derart geneigt ist, dass zwischen einer ersten Projektion (PJ1) der Werkzeugachse (TLX) in der Ebene eines ebenen Koordinatensystems (CDS) der zweiten Achse (AX2) und dritten Achse (AX3) sich im ersten Quadranten (QD1) des ebenen Koordinatensystems (CDS) zu der zweiten Achse (AX2) ein erster Winkel (AG1) kleiner 90° ausgebildet,
wobei die Werkzeugachse (TLX) gegenüber der ersten Achse (AX1) derart geneigt ist, dass zwischen einer Projektion der Werkzeugachse (TLX) in der Ebene eines ebenen Koordinatensystems (CDS) der ersten und dritten Achse (AX3) sich im ersten Quadranten (QD1) dieses ebenen Koordinatensystems (CDS) zu der ersten Achse (AX1) ein Winkel kleiner 90° ausgebildet.

4. Verfahren nach einem der vorhergehenden Ansprüche, wobei die Kontur (CNT) kreiszylinderförmige Seitenwände (SWL) aufweist und die Bewegungsbahn (PTH) eine Helix (HLX) ist.

5. Verfahren nach einem der vorhergehenden Ansprüche,(CNT), zur Fertigung einer Kontur (CNT) mit einer ebenen Bodenfläche (GRA) und zur Bodenfläche (GRA) senkrechten Seitenwänden (SWL),
wobei der Fräser (MLN) ein zylindrischer Schaftfräser (SFM) ist,
wobei eine erste Verfahrensphase (MS3) eine Bearbeitung nach einem der vorhergehenden Ansprüche vorsieht,
wobei eine zweite Verfahrensphase (MS2) eine Aufrichtung der Werkzeugachse (TLX) im Bereich der zu fertigenden ebenen Bodenfläche (GRA) senkrecht zur Bodenfläche (GRA) und ein Fräsen der Seitenwände (SWL) mittels seitlicher Schneiden (CTE) des Schaftfräsers (SFM) vorsieht,
wobei eine dritte Verfahrensphase (MS3) ein Planfräsen der ebenen Bodenfläche (GRA) mittels einer Stirnseite (FTS) des Schaftfräsers (SFM) vorsieht.

6. Verfahren nach einem der vorhergehenden Ansprüche, wobei die Fräsmaschine (MLM) eine 5-Achsen-Fräsmaschine (MLM) ist.

7. Verfahren nach Anspruch 6, wobei drei translatorische Verfahrachsen (TMX) einer Werkzeugaufnahme (TRC) eine Schwenkachse (TRX) eines Maschinentisches (MTB) und eine Rotationsachse (RTX) des Maschinentisches (MTB) vorgesehen sind.

8. Fräsmaschine (MLM), insbesondere 5-Achsen-Fräsmaschine (MLM), ausgebildet und vorbereitet zur Durchführung eines Verfahrens nach einem der Ansprüche 1 bis 7.
